# EUROPEAN PATENT APPLICATION

(11) **EP 1 460 165 A1**
(43) Date of publication of application: **22.09.2004**
(21) Application number: 03005885.3
(22) Date of filing: 16.03.2003
(51) Int. Cl.: D06H 7/24

(54) **Apparatus to manufacture garments starting from tubular knitted textiles and method thus obtained**

(71) Applicant: MATEC S.p.A., 50018 Scandicci (Firenze) (IT)
(72) Inventor: Bassi, Gino, San Giovanni in Persiceto, BO (IT)
(74) Representative: Celestino, Marco

(57) **Abstract**

The apparatus has at least one tubular support (2) capable of rotating about an axis (102) and on which a knitted raw tubular portion (3) is put for being subject to a desired operation. The support (2) has holes (42) in communication with a suction system for causing the knitted raw tubular portion (3), and eventually a semi-finished garment (60) resulting therefrom, to adhere on the surface (2) in order to assure its correct position during the operation. On the support (2) the knitted raw tubular portion (3) can be cut along a desired cutting line (61) that is obtained by combination of the rotation (102) of the tubular support and the translation (D2) of cutting means, which can be of laser type. A plurality of supports (2) may be mounted on a carousel (100) rotatable stepwise about a driven axis and carrying the tubular supports (2) through corresponding cutting (154), moisturizing (151), drawing on the support (152,153), loading (150) and unloading (155), quality checking (150,155) workstations.

## Description

### Field of the invention

The present invention relates to the field of textiles and more precisely it relates to an apparatus to manufacture knitted garments, for example outwear, underwear, swimwear or the like, starting from tubular knitted textiles.

Furthermore, the invention relates to a method that uses this apparatus.

### Background of the invention

As known, for the production of seamless garments circular knitting machines are normally used. This kind of machines allows to obtain tubular knitted articles that are then collected and subject to further finishing operations to provide a predetermined final product.

For example, in order to obtain a shirt starting from a tubular knitted textile a succession of cutting operations provides the apertures for the arms and for the neck.

Then, at the aperture for the neck free ends are sewn together and the shirt is finished by means of seaming operations and with the possible application of elastic strips at the lower edge of the tubular garment.

To prevent the knitted garment from unravelling at the cut edges, in the cutting area the garment must be knitted with special stitches that cannot be unravelled.

However, such special stitches that cannot be unravelled limit the possibility to make from a same raw tubular portion different products. In other words, the production must be programmed with less flexibility.

The whole finishing cycle of the garment provides, before cutting, the step of drawing it on plain forms by steaming and drying. Then, the drawn tubular garment is unloaded from the forms and subject to manual cut with scissors; eventually, finishing seams are made with so called "sewing and cutting" machines. However, the step of manual cut before making the finishing seams requires much manual work.

### Summary of the invention

It is therefore object of the present invention to provide an apparatus for making garments, such as outwear, underwear, swimwear, starting from tubular knitted textiles that makes easier and faster the finishing operations.

It is another object of the present invention to provide an apparatus for making garments starting from tubular knitted textiles without the need to provide special lines of stitches on the article.

It is a further object of the present invention to provide an apparatus for making garments starting from tubular knitted textiles for obtaining much lower production costs.

It is also object of the present invention to provide an apparatus for making garments starting from tubular knitted textiles for reducing the used materials, in particular the forms for the garments.

It is also object of the present invention to provide an apparatus for making garments starting from tubular knitted textiles that allows to obtain in a single operation the drawing and cutting steps.

These and other objects are achieved by the apparatus according to the invention for making knitted garments starting from a knitted raw tubular portion, whose main feature is that it comprises at least one tubular support capable of rotating about at least one axis on which the knitted raw tubular portion is put for being subject to at least one operation.

Advantageously, the tubular support is peripherally equipped with a plurality of holes in communication with a suction system suitable for causing the garment to adhere on the support surface in order to maintain a correct position during the operation.

The operation can be a cutting step, and in this case the tubular support is associated to at least one means for cutting the knitted raw tubular portion according to at least one predetermined cutting line; the cutting means being capable of moving with respect to the tubular support along at least one direction. In particular, by combination of rotation of the tubular support and of translation of the cutting means, edges can be cut of desired shape.

Advantageously, said or each axis about which said tubular support can rotate is an electronically controlled axis. This is made, for example, operating said tubular support by means of motors associated to an encoder, resolver, potentiometer, etc. capable of measuring with high precision the angular position of the shaft of the motor and therefore of the axis about which the tubular support rotates. Means are also provided for measuring instantly the position of the cutting means.

This way, it is possible to know instantly with high precision the angular relative position of the tubular support and the coordinates of the cutting means; the cut edges of the knitted raw tubular portion can have a desired shape with high precision and at high speed simply choosing a cutting program run by the computer.

Preferably, said cutting means is of laser type. This way, with knitted garments of synthetic yarn the cutting step is possible without the need of preliminarily knitting on the article stitches that cannot be unravelled; in fact the laser at the same time cuts and melts the fibres along a line, and the suction of air immediately cools them, which therefore in use cannot be unravelled.

The tubular support may have either cylindrical shape or a shape according to an anatomical profile to be followed by the knitted raw tubular portion.

According to another aspect of the invention, an apparatus to manufacture knitted garments starting from a knitted raw tubular portion comprises a carousel rotatable about a driven axis on whose boundary a plurality is arranged of tubular supports, each tubular support being carried stepwise by the carousel through corresponding workstations.

Advantageously, at least at one of said workstations said tubular supports are operatively connected to actuating means, which causes them to rotate about at least one electronically controlled axis.

Preferably, said tubular supports have peripherally a plurality of holes that at least at one workstation are put in communication with a suction system, in order to cause to processed tubular knitted textiles to adhere on the surface of the tubular support same. This way, the correct position is assured of the processed knitted raw tubular portion during the operation.

In particular, one of the workstations can be a moisturizing station where at least one spray means is provided suitable for moisturizing the processed knitted raw tubular portion.

After the moisturizing station at least one drying station can be provided. In particular, in the or each drying station the knitted raw tubular portion put on the tubular support is crossed by a warm air flow that draws it on the support same.

One of the stations provided is a cutting station on the tubular support.

Preferably, in the cutting station the step of cutting the knitted raw tubular portion is made through a cutting means movable along at least one direction with respect to the tubular support; the latter is operatively connected to said actuating means, which cause it to rotate about at least one electronically controlled axis. In particular, the cutting step is carried out through a combination of controlled motion of the tubular support and the cutting means in order to provide quickly and precisely cut edges of desired shape. At the same time, the tubular support is put in communication with the suction system.

According to a further aspect of the invention, a method for making knitted garments starting from a knitted raw tubular portion provides the following steps:
- putting a knitted raw tubular portion on a tubular support;
- treating said knitted raw tubular portion on said tubular support, comprising at least one of the following operations: cutting, moisturizing, quality checking.

Preferably, the tubular support is peripherally equipped with a plurality of holes in communication with a suction system suitable for causing the garment to adhere on the support surface in order to assure its correct position during the operation.

Advantageously, the cutting step of the knitted raw tubular portion is made rotating the tubular support about at least one electronically controlled axis and moving a cutting tool, selected from the group of laser, ultrasound, mechanical cutter etc., in a sliding direction in order to cut edges according to a predetermined shape through a combination of motion between the support and the cutting tool.

### Brief description of the drawings

Further characteristics and the advantages of the apparatus for making knitted garments starting from a knitted raw tubular portion, according to the present invention, will be made clearer with the following description of an embodiment thereof, exemplifying but not limitative, with reference to the attached drawings, wherein:
- figures from 1 to 4 show diagrammatically a possible succession of steps after putting a knitted raw tubular portion on a tubular support, according to the invention;
- figure 5 shows in a perspective elevation front view a tubular support according to an alternative embodiment with respect to figures 1-4;
- figures from 6 to 8 show diagrammatically elevational front views of three possible operations that can be made on a knitted raw tubular portion put on the tubular support of figure 5;
- figures 9A and 9B show diagrammatically in an elevational front view a possible quick lock/release mechanism to connect the tubular support of figure 5 to a motor unit;
- figures 10 and 11 show respectively an elevational front view and a top plan view of a carousel according to the invention.

### Description of a preferred embodiment

With reference to figures from 1 to 4 an apparatus 1 for making knitted garments 60 starting from a knitted raw tubular portion 3 comprises a tubular support 2 capable of rotating about an electronically controlled axis 102. In particular, the knitted raw tubular portion 3 is put on tubular support 2 for being then subject to at least one operation, for example a cutting step as in the case shown in figures from 1 to 4.

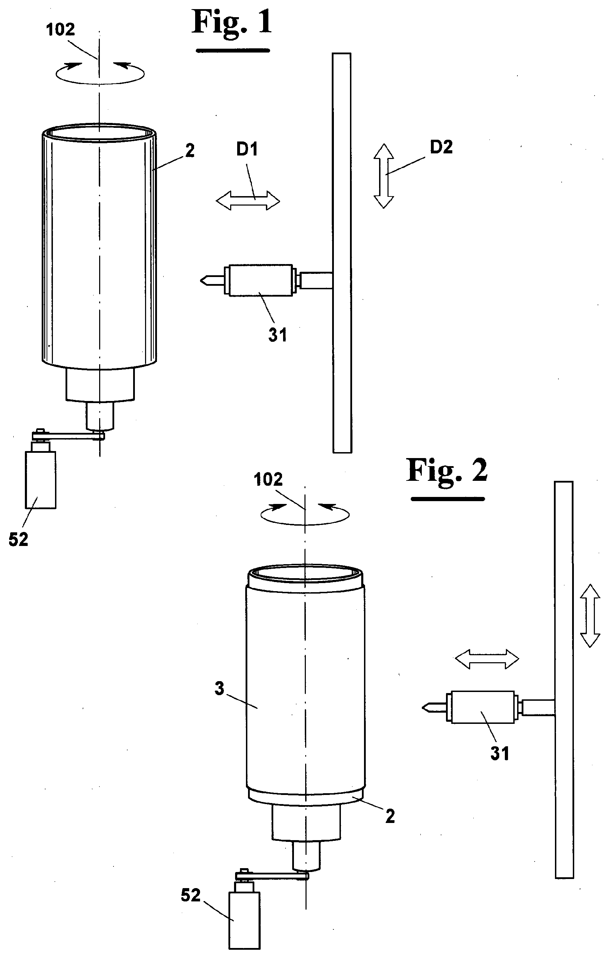

More in detail, the cutting step is carried out through a combination of programmed movements comprising the rotation of support 2 about axis 102 and at the same time the translation of a cutting means, for example a laser cutter 31. In particular, laser cutter 31 can be moved by a motor 51 according to two orthogonal directions indicated in figure 1 with D1 and D2. More precisely, laser cutter 31 is translated according to direction D1 only for preliminary approaching, for positioning it correctly with respect to the processed knitted raw tubular portion 3 and back movement, whereas the translation according to direction D2 is followed by laser cutter 31 during the cutting step.

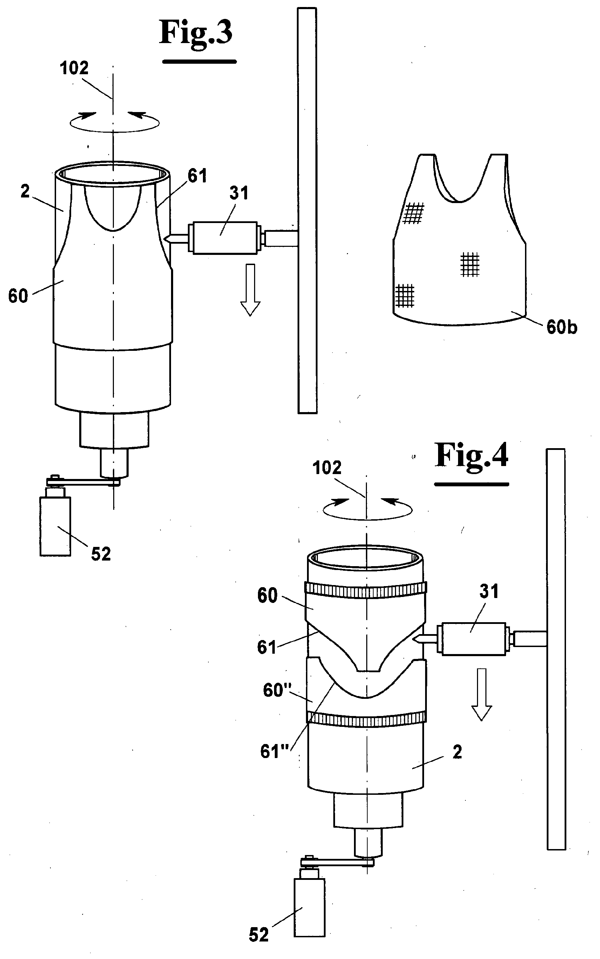

The rotation with controlled axis can be made, for example, operating tubular support 2 by a motor 52 associated to an encoder, or a resolver, or a potentiometer, etc. capable of measuring the angular position of the shaft and therefore of axis 102. Similarly, means are provided for measuring instantly also the position of laser cutter 31. This way, it is possible to know instantly and with high precision the angular relative position of tubular support 2 and the coordinates of laser cutter 31. This provides on the knitted raw tubular portion 3 cut edges 61 according to a desired shape to obtain a semi-finished knitted garment 60, for example a shirt (figure 3), underwear (figure 4), etc., with high precision and at a high speed simply choosing a cutting program run by a computer according to a CAD-CAM system. After the cutting step the semi-finished knitted garment 60 is then subject to seaming and finishing operations obtaining eventually a garment 60b.

The cutting step carried out as above described allows to reduce remarkably the used materials since the position of the garments on tubular support 2 can be optimised (figure 4), obtaining on a same support two or more garments 60, 60', etc., thus reducing scrap portions.

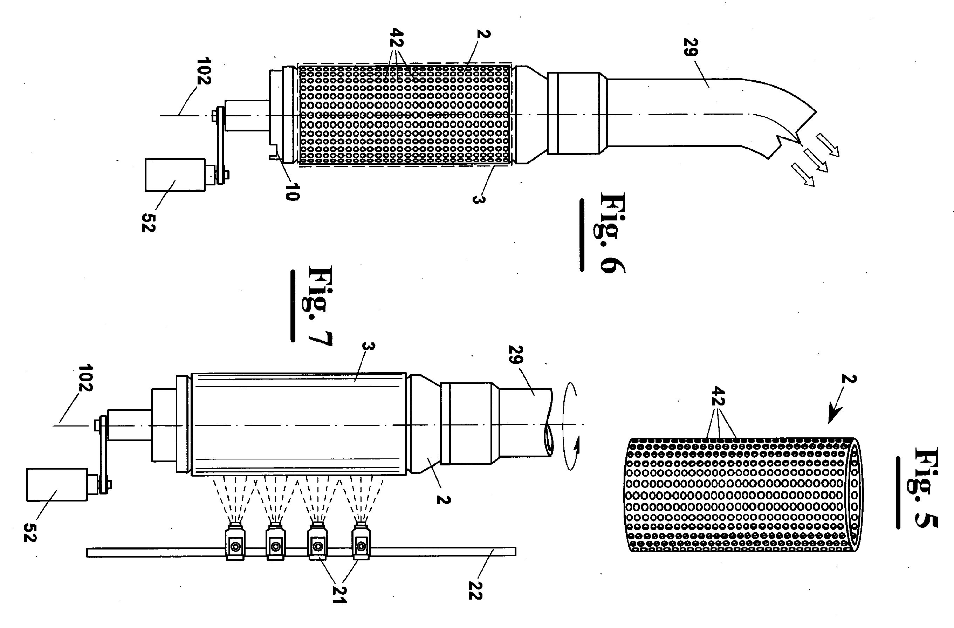

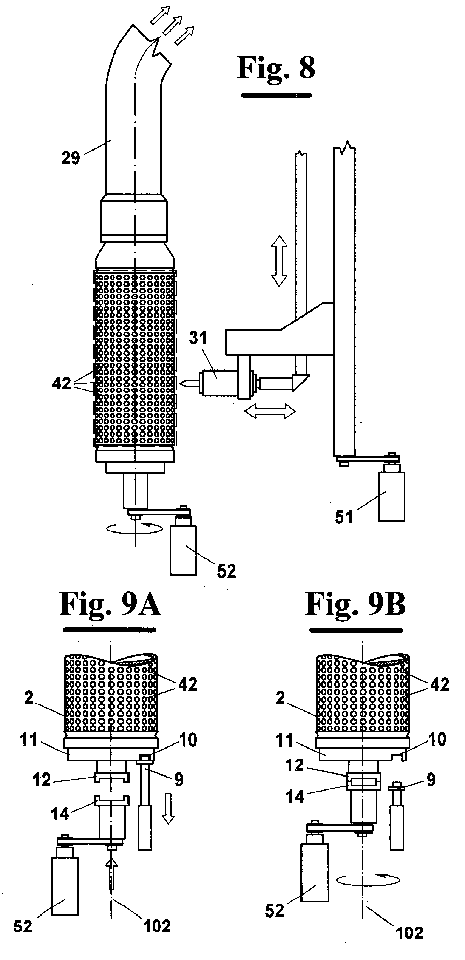

In an embodiment alternative to that shown in figure 5, a tubular support 2 can be peripherally equipped with a plurality of holes 42 that are in communication with a suction system, not shown, through a duct 29 (figure 6), causing the knitted raw tubular portion 3 to adhere on the surface of the tubular support 2. This way, the correct position is assured of the processed portion 3 on tubular support 2 during a cutting step (figure 8) by a laser cutter 31.

According to another aspect of the invention, a plurality of tubular supports 2, as above described, can be mounted on the boundary of a carousel 100 rotatable about a driven axis 101, i.e. by means of gear motor and transmission 55. The carousel 100 brings stepwise each support 2 trough respective workstations. According to the type of operation it can be selectively necessary to rotate tubular support 2 about axis 102. Therefore, a coupling of axis 102 and support 2 associated to a motor unit 52 can be provided.

In figures 9A and 9B a possible embodiment is shown for a coupling comprising a bolt 9 that can be put in a housing 10 of a base 11 on which tubular support 2 can be mounted. The mechanism comprises also a clutch element 12 integral to the shaft of support 2 that can match a clutch element 14 integral to motor unit 52.

More in detail, when tubular support 2 stops at a workstation in which is not necessary its rotation about axis 102, for example in case of a station of loading 150 or unloading 155, carried out manually by an operator 50, motor unit 52 is switched off by the shaft of support 2 bringing the two clutch elements 12-14 apart, while bolt 9 is inserted in housing 10 (figure 9A). This avoids that during the treatment in that station relative support 2 can rotate freely in a way not controlled.

When, instead, tubular support 2 stops at a station in which the rotation about axis 102 is preferable or necessary, for example in case of a moisturizing station 151 or a cutting station 154, the bolt 9 that locks support 2 is withdrawn from housing 10 and then lower clutch element 14, operated for example by a piston pneumatic, matches upper clutch element 12. This way, motor unit 52 can bring support 2 into rotation about axis 102.

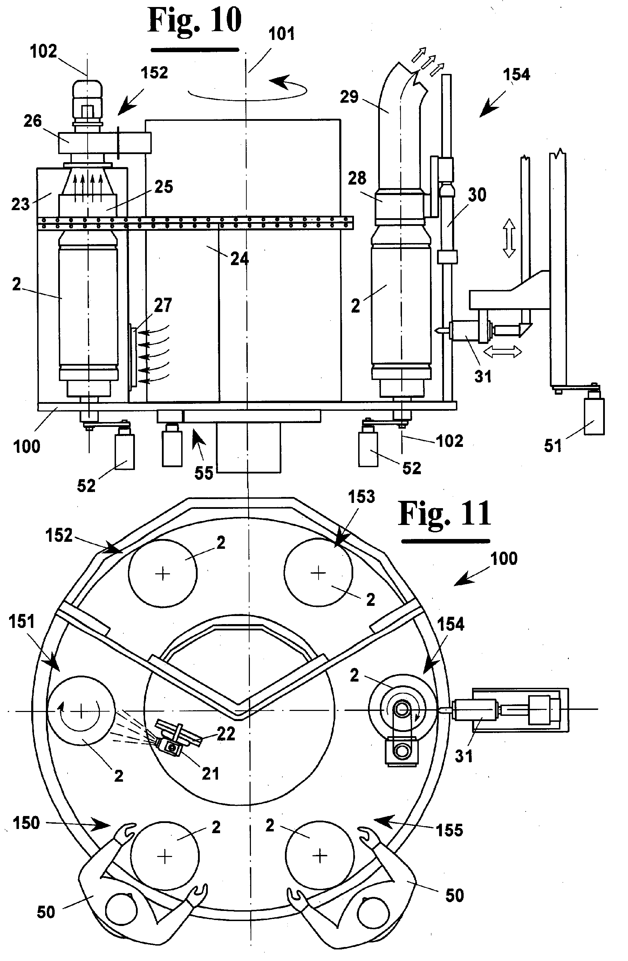

As shown in figure 10, when tubular support 2 is at drying station 152 it enters drying tunnel 23 and remains inside for two steps of carousel 100. At each cycle the inlet/outlet sliding doors 24 of tunnel 23 are closed. On the roof of tunnel 23 heaters 25 are arranged above which air aspirators 26 are installed. The air passes through heaters 25 and exits warm, reaching through ducts and grids 27 tunnel 23 from below. This way, a vortex of warm air from below towards the above in tunnel 23 reaches the article 3 and draws it.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. Apparatus for making knitted garments starting from a knitted raw tubular portion **characterised in that** it comprises at least one tubular support capable of rotating about at least one axis on which said knitted raw tubular portion is put for being subject to at least one operation.

2. Apparatus, according to claim 1, wherein said tubular support is peripherally equipped with a plurality of holes in communication with a suction system suitable for causing said knitted raw tubular portion to adhere on the surface in order to assure its correct position during the operation.

3. Apparatus, according to claim 1, wherein when said operation is a cutting step said tubular support is associated to at least one means for cutting said knitted raw tubular portion according to at least one predetermined cutting line, said means for cutting being capable of moving with respect to said tubular support along at least one direction, said cutting step being executed by combination of rotation of said tubular support and of translation of said cutting means whereby edges of said garments can be cut of desired shape.

4. Apparatus, according to claim 1, wherein said or each axis about which said tubular support can rotate is an electronically controlled axis.

5. Apparatus, according to claim 4, wherein the control of said axis of rotation of said tubular support is carried out operating it by means of motors associated to means for detecting the angular position of the shaft selected from the group of: encoder, resolver, potentiometer.

6. Apparatus, according to claim 3, wherein said cutting means is of laser type.

7. Apparatus to manufacture knitted garments starting from a knitted raw tubular portion **characterised in that** it comprises a carousel rotatable about a driven axis on whose boundary a plurality is arranged of tubular supports, each tubular support being carried stepwise by the carousel through corresponding workstations.

8. Apparatus, according to claim 7, wherein at least at one of said stations said tubular supports are operatively connected to actuating means, which causes them to rotate about at least one electronically controlled axis.

9. Apparatus, according to claim 7, wherein said tubular supports have peripherally a plurality of holes that at least at one station are put in communication with a suction system in order to cause said knitted raw tubular portion to adhere on the surface of said tubular support.

10. Apparatus, according to claim 7, wherein at least one of the workstations is a moisturizing station wherein at least one spray means is provided suitable for moisturizing the processed knitted raw tubular portion.

11. Apparatus, according to claim 7, wherein at least one of the workstations provided is a drying station at which said knitted raw tubular portion put on said tubular support is crossed by a warm air flow that draws it on the tubular support.

12. Apparatus, according to claim 7, wherein at least one of the workstations is a cutting station of said knitted raw tubular portion on the tubular support.

13. Apparatus, according to claim 12, wherein the knitted raw tubular portion is cut by a cutting means movable along at least one direction with respect to said tubular support, the latter being operatively connected to said actuating means, which causes them to rotate about at least one electronically controlled axis, said cutting step occurring by combination of the motion of said tubular support and said cutting means in order to cut edges of desired shape.

14. Method for making knitted garments starting from a knitted raw tubular portion **characterised in that** it provides the following steps:
- putting a knitted raw tubular portion on a tubular support;
- treating said knitted raw tubular portion on said tubular support, comprising at least one of the following operations: cutting, moisturizing, drawing on the support, quality checking.

15. Method, according to claim 14, wherein said tubular support is peripherally equipped with a plurality of holes in communication with a suction system suitable for causing the garment to adhere on the support surface in order to assure its correct position during the relative treatment.

16. Method, according to claim 14, wherein the cutting of the knitted raw tubular portion is made rotating the tubular support about at least one electronically controlled axis and moving a cutting tool, selected from the group of laser, ultrasound, mechanical cutter, etc. in a sliding direction in order to cut edges according to a desired shape through a combination of the motion of the support and the cutting tool.

## Amended claims

### Amended claims in accordance with Rule 86(2) EPC.

1. Apparatus for making knitted garments starting from a knitted raw tubular portion **characterised in that** it comprises at least one tubular support capable of rotating about at least one axis on which said knitted raw tubular portion is put for being subject to at least one operation.

2. Apparatus, according to claim 1, wherein said tubular support is peripherally equipped with a plurality of holes in communication with a suction system suitable for causing said knitted raw tubular portion to adhere on the surface in order to assure its correct position during the operation.

3. Apparatus, according to claim 1, wherein when said operation is a cutting step said tubular support is associated to at least one means for cutting said knitted raw tubular portion according to at least one predetermined cutting line, said means for cutting being capable of moving with respect to said tubular support along at least one direction, said cutting step being executed by combination of rotation of said tubular support and of translation of said cutting means whereby edges of said garments can be cut of desired shape.

4. Apparatus, according to claim 1, wherein said or each axis about which said tubular support can rotate is an electronically controlled axis.

5. Apparatus, according to claim 4, wherein the control of said axis of rotation of said tubular support is carried out operating it by means of motors associated to means for detecting the angular position of the shaft selected from the group of: encoder, resolver, potentiometer.

6. Apparatus, according to claim 3, wherein said cutting means is of laser type.

7. Apparatus to manufacture knitted garments starting from a knitted raw tubular portion **characterised in that** it comprises a carousel rotatable about a driven axis on whose boundary a plurality is arranged of tubular supports, each tubular support being carried stepwise by the carousel through corresponding workstations.

8. Apparatus, according to claim 7, wherein at least at one of said stations said tubular supports are operatively connected to actuating means, which causes them to rotate about at least one electronically controlled axis.

9. Apparatus, according to claim 7, wherein said tubular supports have peripherally a plurality of holes that at least at one station are put in communication with a suction system in order to cause said knitted raw tubular portion to adhere on the surface of said tubular support.

10. Apparatus, according to claim 7, wherein at least one of the workstations is a moisturizing station wherein at least one spray means is provided suitable for moisturizing the processed knitted raw tubular portion.

11. Apparatus, according to claim 7, wherein at least one of the workstations provided is a drying station at which said knitted raw tubular portion put on said tubular support is crossed by a warm air flow that draws it on the tubular support.

12. Apparatus, according to claim 7, wherein at least one of the workstations is a cutting station of said knitted raw tubular portion on the tubular support.

13. Apparatus, according to claim 12, wherein the knitted raw tubular portion is cut by a cutting means movable along at least one direction with respect to said tubular support, the latter being operatively connected to said actuating means, which causes them to rotate about at least one electronically controlled axis, said cutting step occurring by combination of the motion of said tubular support and said cutting means in order to cut edges of desired shape.

14. Method for making knitted garments starting from a knitted raw tubular portion **characterised in that** it provides the following steps:
- putting a knitted raw tubular portion on a tubular support;
- treating said knitted raw tubular portion on said tubular support, comprising at least one of the following operations: cutting, moisturizing, drawing on the support, quality checking.
- said tubular support being selectively capable of rotating about at least one axis.

15. Method, according to claim 14, wherein said tubular support is peripherally equipped with a plurality of holes in communication with a suction system suitable for causing the garment to adhere on the support surface in order to assure its correct position during the relative treatment.

16. Method, according to claim 14, wherein the cutting of the knitted raw tubular portion is made rotating the tubular support about at least one electronically controlled axis and moving a cutting tool, selected from the group of laser, ultrasound, mechanical cutter, etc. in a sliding direction in order to cut edges according to a desired shape through a combination of the motion of the support and the cutting tool.
